# EUROPEAN PATENT APPLICATION

(11) **EP 4 600 231 A1**
(43) Date of publication of application: **13.08.2025**
(21) Application number: 25156904.2
(22) Date of filing: 10.02.2025
(51) Int. Cl.: C04B 30/00, C04B 30/02, F17C 1/00, C04B 111/28

(54) **INSULATION PRODUCT, MANUFACTURING METHOD AND SYSTEM**

(30) Priority: 08.02.2024 EP 24156703
(71) Applicant: PRTC NV, 2830 Tisselt (BE)
(72) Inventor: ABDUL-KADER, Oras, 9100 Sint Niklaas (BE); OPSOMMER, Ann, 1850 Grimbergen (BE)
(74) Representative: Etex Services NV - Etex IPSC

(57) **Abstract**

The fire-retardant insulation product 20 comprising a particulate microporous insulation material 31 and a particulate inorganic fire protection material 32. The microporous insulation material 31 may be pyrogenic silica, pyrogenic alumina, aerogel or precipitated silica or a combination thereof. The particulate inorganic fire protection material 32 is for instance a calcium silicate, such as a synthetic form of calcium silicate. The particulate material 31, 32 is present in an envelope 23 and gets compacted prior to closing the envelope 23. The insulation product 20 is arranged around a storage container 10, a pipe, a vessel and is particularly but not exclusively configured for use in cryogenic conditions.

## Description

### FIELD OF THE INVENTION

The invention relates to an insulation product comprising particulate microporous insulation material. The invention further relates to the manufacture and use thereof and to a system comprising a cylindrical object with the insulation product around it.

### BACKGROUND OF THE INVENTION

Global warming and limited reserves of fossil fuels lead to investigations for greener sources of energy, with less emission of greenhouse gases such as carbon dioxide and methane into the air. A first major development resides in the use of fuel cells and batteries that are loaded with electrical energy from solar panels, wind turbines or the electricity grid. A second major development resides in the use of hydrogen. Additionally, energy efficiency innovations are made, often resulting in use and/or pumping of heated liquids, for instance as heat pumps. Herein, the material in storage containers, pipes and the like are often put at higher pressure.

Insulation materials play an important, though secondary role herein. The insulation is necessary to minimize heat losses and achieve economically viable efficiencies, but also to ensure safety, so as to avoid that people might be harmed through contact with the hot or cold material. A variety of insulation materials is commercially available. One type of so-called high performance insulation is based on microporous insulation material. These materials have a low thermal conductivity compared to conventional insulation materials such as mineral wool. They are based on insulation powder, opacifier and typically inorganic fiber. Examples of insulation powder include pyrogenic silica, pyrogenic alumina and aerogel. Pyrogenic silica and pyrogenic alumina moreover have a temperature stability of at least 1000°C, rendering them suitable for special applications. Microporous insulation based on pyrogenic silica and pyrogenic alumina is commercially available in the form of rigid and flexible panels, insulation blankets, granulates and molded material.

Still, there is a desire to improve overall performance as to safety for storage containers and other receptacles for fluids under pressure and typically at temperatures far away from ambient temperature. This especially but not exclusively relates to situations wherein such receptacles and storage containers are made of polymer materials. These are both thermally insulating and electrically insulating and may be cheaper than metal containers. Furthermore, metal may be more sensitive to corrosion. However, mechanical stability of polymers is less and their coefficient of thermal expansion generally higher. Hence, safety is a point of attention.

### SUMMARY OF THE INVENTION

It is therefore a first object of the invention to provide an improved insulation product.

It is a further object of the invention to provide an improved system of a storage container, vessel and/or conduit in combination with an insulation product.

It is a further object to provide an improved manufacturing method.

According to a first aspect, the invention relates to a fire-retardant insulation product comprising a particulate microporous insulation material and a particulate inorganic fire protection material. According to a second aspect, the invention relates to a method of manufacturing a fire-retardant insulation product, comprising the steps of: providing an encapsulation material; encapsulating a particulate microporous insulation material and a particulate mineral fire protection material in said encapsulation material to an assembly; and compacting said assembly into said fire-retardant insulation product.

According to a further aspect, the invention relates to the use of the insulation product according to the invention around a storage container, vessel and/or conduit.

According to again a further object, the invention relates to a system of a storage container, vessel and/or conduit and an insulation product according to the invention, wherein the insulation product is arranged around the storage container, vessel and/or conduit. More particularly, the system comprises a cryogenic storage container, cryogenic vessel and/or cryogenic conduit.

It has been understood by the inventors that a single product comprising the combination of a particulate microporous insulation material and a particulate inorganic fire protection material provides beneficial properties. This insulation product provides protection against heat and fire, especially from an external side. Hence, if there is any malfunctioning leading to smoke, fire and temperature increase in the vicinity of a storage container, vessel or conduit at low temperature, this low temperature can be maintained for an increased period of time. That is relevant for safety, since unexpected heating may lead to evaporation of stored liquids and hence a risk for explosion.

The particulate microporous insulation material and the particulate inorganic fire protection material are preferably provided in a single encapsulation or shell. Types of encapsulations as in use for microporous panels and blankets are deemed preferable. These are for instance glass cloth materials, while other textile materials can be chosen alternatively. By integrating the two different types of materials into one encapsulation, a customer is provided with a single product with extended properties.

In one implementation, the particulate microporous insulation material and the particulate inorganic fire protection material are mixed into a combined particulate material. This is deemed practical for manufacturing.

In another preferred implementation, the particulate microporous insulation material and the particulate inorganic fire protection material are present in a first and a second layer. So, the materials are laminated. This is deemed beneficial for performance, such as heat transfer. Furthermore, a layerwise arrangement is considered beneficial for packing of the particulate materials, and it ensures that the performance is uniform over the entire surface area of the insulation product. While a first and a second layer is deemed sufficient and appropriate, the layerwise arrangement involves an alternating arrangement of first layers and second layers.

In a specific further implementation, an insulation product is created which is unsymmetric; i.e. the fire protection material is arranged, at least predominantly, for instance for at least 80%, on one side and the insulation material is arranged, at least predominantly, for instance for at least 80%, on the other opposed side. The product may then be provided and marked as having a specific inner side and a specific outer side.

The particulate inorganic fire-protection material is preferably a mineral material. It is more particularly chosen from the group of calcium silicate, vermiculite, perlite, diatomaceous earth and combinations thereof. These mineral materials are all silicate and/or aluminate based, resulting therein that they provide some insulation in addition to their fire-protection properties. Preferred materials are characterized by a specific surface area of at least 25 m²/g as measured in accordance with BET-isotherm. A more preferred material is calcium silicate, which has a specific surface are of at least 30 m²/g.

Most preferable are synthetic materials of calcium silicates. The advantage of synthetic materials is that the particle size and porosity can be optimized during synthesis. For non-synthetic materials, the particle size distribution may only be modified by sieving, which results in significant waste, and moreover may result in clogging issues. One such synthetic calcium silicate is a synthetic xonotlite, which is commercially available from Promat International under the trade name Promaxon^{®}. This material has pore diameters generally below 1 µm, which is very small as compared to alternative fire-protection materials.

The particulate microporous material comprises an insulation powder, an opacifier, optionally a fiber and optionally a filler. The fiber is typically present in an amount of less than 10% by weight, preferably less than 5% by weight. Examples of fibers are for instance glass fibers, silica fibers, alumina fibers, as well as mixed-oxide fibers that are for instance primarily based on silica or alumina. Fillers may be added for cost reasons. Opacifiers for use in microporous material are known, and for instance include titanium oxide, ilmenite, iron (II), iron (III) mixed oxides, chromium dioxide, zirconium oxide, manganese oxide, iron oxide, aluminium oxide, zirconium silicate, silicon carbide. Silicon carbide and titanium oxide (rutile) are preferred opacifiers. Preferred insulation powders are pyrogenic silica, pyrogenic alumina, precipitated silica and silica aerogel.

In one preferred embodiment, at least 50% by weight of the insulation powder is chosen from the group selected from pyrogenic silica, pyrogenic alumina or combinations thereof. Preferably, at least 80% by weight of the insulation powder is chosen from the group selected from pyrogenic silica, pyrogenic alumina or combinations thereof. Hence, the insulation powder is preferably a pyrogenic powder instead of an aerogel. Moreover, the amount of non-pyrogenic forms of silica or alumina, such as precipitated silica, microsilica and silica fuse, is at most 50% by weight, and preferably at most 20% by weight. Such non-pyrogenic forms of silica may be suitable for products intended for use at lower temperatures, for instance up to 300°C, but the insulation performance quickly deteriorates upon heating. When the amount of non-pyrogenic forms of silica and alumina is at most 20%, insulation performance can be preserved. In such case, thermal conductivity will increase, but generally less than 10% increase. The temperature limit, i.e. the maximum temperature at which the material may be used without significant deterioration is comparable. Of all non-pyrogenic forms of silica, precipitated silica is most preferred, since it has a comparatively large specific surface area and presence of micropores is assumed. Preferably, at least 90% by weight of the insulation powder is chosen from the group of pyrogenic silica, pyrogenic alumina or combinations thereof. Pyrogenic silica is the name for pyrogenically prepared silicic acids. Alumina, if used, is preferably prepared analogously.

In a preferred implementation, the insulation powder is pyrogenic silica. It is for instance present in an amount of 30 to 90 weight percent, and preferably 40 to 80 weight percent, based on total dry weight of the microporous material. Pyrogenic silica is the name for pyrogenically prepared silicic acids and may include for instance silicic acid, precipitated low-alkali silicic acids, silicon dioxide aerogels. Alumina, if used, is preferably prepared analogously. Microporous powder compositions comprising pyrogenic silica may have a temperature stability up to 1000oC, and have been found appropriate for granulation. If a temperature stability to higher temperatures would be desired, alumina is to be added or used. Particle sizes of the insulation powder is for instance between 2 and 300 nanometers, with a particle size between 4 and 100 nm being more common and a particle size between 4 and 20 nm most common.

In one implementation, the microporous material comprises the opacifier in an amount of 10-50 wt%, the insulation powder in an amount of 40-80wt% and said filler in an amount of 0-50 wt%. This has been observed to provide an acceptable powder composition for granulation. More preferably, the microporous material comprises the opacifier in an amount of 15-35 wt%, the insulation powder in an amount of 40-80wt% and a filler in an amount of 0-20 wt%. The microporous material is generally a powder composition that is free of any binder material.

The combination of a microporous material comprising pyrogenic silica and a fire protection material comprising synthetic calcium silicate such as synthetic xonotlite is deemed most preferable. Not only does the synthetic calcium silicate have a high specific surface area and small pore diameters, but furthermore its mean particle size is in the range of 25-100 µm, preferably 35-80 µm. Additionally, both such materials can be suitable compacted to achieve a desired packing.

In a further embodiment, the particulate microporous material is present in an amount of 30-90% by weight, and the particulate fire-protection material is present in an amount of 10-70% by weight, wherein said weight% are based on total amount of particulate material. More preferably, the amounts are 30-70% by weight and 30-70% by weight. A preferred amount is 40-60% and 40-60% by weight, such as 50-50%. However, it may be advantageous that the amount of microporous material exceeds the amount of fire protection material.

The insulation product may be designed to have a desired degree of flexibility and a desired thickness. As it is preferred to arrange the insulation product around a pipe, vessel and/or container, a flexible panel is deemed preferred over a rigid panel. At the current stage, slatted panels and overstitched panels are deemed preferable. A slatted panel includes a series of coupled bars filled with particulate material. An overstitched panel can be stitched in one direction or two directions. Its composition comprises an increased amount of fibers, for instance 3% by weight or more.

It is deemed that the insulation product is very advantageous for cryogenic applications. Furthermore, benefits are expected for pipes, such as piping towards storage containers. However, the effective combination may further be practical in other applications as well. As known in the art, the term ' cryogenic' refers in the context of the present invention to applications requiring a temperature well below freezing point of water (°C) and especially of less than -100°C or even of at most -173°C (100K). Any embodiment discussed or recited with respect to one aspect of the invention also applies and is deemed disclosed with respect to another aspect of the invention.

### BRIEF INTRODUCTION OF THE FIGURES

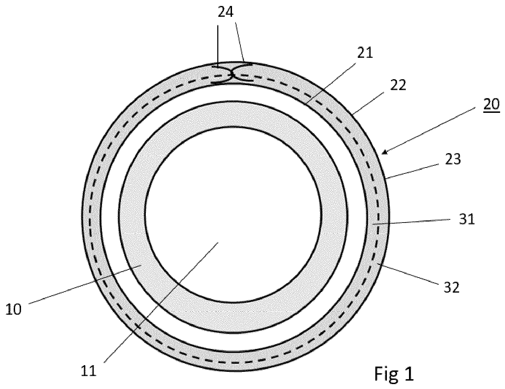

Fig. 1 shows in diagrammatical, cross-sectional view a system comprising a storage container and an insulation product according to the invention.

### DETAILED DESCRIPTION OF ILLUSTRATED EMBODIMENT

Fig. 1 shows in diagrammatical, cross-sectional view a system comprising a storage container 10 and an insulation product 20. The interior 11 of the storage container 20 will in use be filled or ready for filling or containing any material to be stored. In one embodiment, this material may be a gas that is brought into the liquid state at a cryogenic temperature, such as liquid hydrogen, liquid nitrogen. The storage container preferably comprises a polymer material. Examples of storage containers made of polymer materials are known per se, and may include a series of layers of mutually distinct composition. Storage container of polymer material deemed appropriate as a cryogenic tank are for instance known from patent publications US2018/0048001; WO2022189470, WO2023048073; US20230122936; EP3984734 and WO2022/112694. The insulation product 20 is provided with an inner side 21 and an outer side 22, and is provided around the storage container 20.

While Fig. 1 shows a gap between the insulation product 20 and the storage container 10, this is done for illustration purposes and need not be present, or could be filled with an appropriate material, such as a resin or granulate. While Fig. 1 shows that the insulation product 20 is essentially circumferential to the storage container 10, with its ends 24 abutting each other, it is not excluded that the insulation product may be wrapped around the storage container 10 and thus include several turns rather than one. It is furthermore feasible that a single insulation product 20 would not be large enough to go around the storage container 10 entirely. In such case, more than one insulation product 20 may be applied. It is furthermore observed for sake of clarity that the storage container 10 and the insulation product 20 are not drawn to scale and are purely diagrammatical.

As shown in Fig. 1 the insulation product of the invention comprises a shell or encapsulation 23 in between of which particulate material 31, 32 is present. It is not excluded, though not shown here that the particulate materials 31, 32 would be mutually separated by means of any intermediate layer, which may be identical to the material of the shell or encapsulation 23. While Fig.1 shows that the particulate material is present as a laminate of two layers 31, 32, this is preferred but not necessary. In accordance with the invention, the insulation product 20 comprises particulate microporous material 31 and particulate inorganic fire protection material 32. The preferred particulate microporous material 31 is pyrogenic silica. The preferred particulate fire protection material is a synthetic form of calcium silicate, more particularly synthetic xonotlite as known per se. More preferably, the synthetic form of calcium silicate has been made to obtain a mean particle size corresponding to the main particle size of the agglomerates of the microporous material. Such microporous material comprises an insulation powder, an opacifier, preferably inorganic fiber and optionally a filler. Ranges for the different ingredients are known per se in the art and specified in numerous patent applications, for instance US4365135. The particulate materials will be compacted after insertion into the shell 23. The shell 23 is furthermore typically finalized by means of stitching, as known to the skilled person in the art and apparent from product brochures. In the illustrated embodiment with its laminate of the microporous material 31 and the fire protection material 32, the insulation product 20 has become asymmetric in the sense that one side (here the outer side 22) is distinct from the other side (here inner side 21). A marking may be applied on the shell 23 of the insulation product 20 for indication to a customer. However, it is alternatively feasible to apply a lamination such that the insulation product 20 will be symmetric, for instance by applying a layer of particulate fire protection material between a first and a second layer of microporous material. It is furthermore feasible to apply a series of layers in alternating order. The insulation product 20 has preferably a thickness in the range of 3 to 100 mm, but for instance 5 to 50 mm, so as to obtain appropriate insulation and fire protection without becoming too stiff to bend the insulation product around the container 10. While the present figure 1 indicates a container 10, the insulation product 20 of the invention may further be applied with advantage around a pipe or piping, for instance a piping to be coupled to a storage container.

## Claims

1. Fire-retardant insulation product comprising a particulate microporous insulation material and a particulate inorganic fire protection material.

2. Insulation product as claimed in claim 1, wherein the inorganic fire protection material is chosen from the group of calcium silicate, vermiculite, perlite and diatomaceous earth.

3. Insulation product as claimed in claim 2, wherein the particulate inorganic fire protection material is a calcium silicate material.

4. Insulation product as claimed in claim 3, wherein the particulate calcium silicate material is a synthetic material, preferably synthetic xonotlite.

5. Insulation product as claimed in any of the preceding claims 1-4, wherein the microporous insulation material comprises an opacifier and an insulation powder chosen from the group of pyrogenic silica, pyrogenic alumina and aerogel.

6. Insulation product as claimed in any of the preceding claims, wherein the microporous insulation material and the fire protection material are jointly encapsulated in a single shell, for instance a Glass cloth material.

7. Insulation product as claimed in any of the preceding claims, comprising 30-70% by weight of microporous insulation material and 30-70% by weight of inorganic fire protection material, wherein said weight% are based on total amount of particulate material.

8. Insulation product as claimed in any of the preceding claims, wherein said particulate materials are jointly compacted.

9. Insulation product as claimed in any of the preceding claims, wherein the particulate microporous insulation material and the particulate mineral fire protection material are arranged as a first and a second layer.

10. Insulation product as claimed in any of the preceding claims 1-8, wherein the particulate microporous insulation material and the particulate mineral fire protection material are present as a mixed particulate material.

11. Method of manufacturing a fire-retardant insulation product, particularly as claimed in any of the preceding claims, comprising the steps of:
- providing an encapsulation material;
- encapsulating a particulate microporous insulation material and a particulate mineral fire protection material in said encapsulation material to an assembly;
- compacting said assembly into said fire-retardant insulation product.

12. The method as claimed in claim 11, wherein the particulate microporous insulation material and the particulate mineral fire protection material are applied as a first and a second layer, wherein optionally the first layer and the second layer are mutually separated by a separation layer in the insulation product.

13. Use of the insulation product as claimed in any of the claims 1-10 or the insulation product resulting from the method as claimed in any of the claims 11-12 around a storage container, vessel and/or conduit.

14. Use as claimed in claim 13, wherein the object is a cryogenic storage container.

15. System of a cryogenic storage container, cryogenic vessel and/or cryogenic conduit and of an insulation product as claimed in any of the claims 1-10 or as resulting form the method as claimed in any of the claims 11-12, wherein the insulation product is arranged around the cryogenic storage container.
